# EUROPÄISCHE PATENTANMELDUNG

(11) **EP 3 106 717 A1**
(43) Veröffentlichungstag der Anmeldung: **21.12.2016**
(21) Anmeldenummer: 16171202.1
(22) Anmeldetag: 25.05.2016
(51) Int. Cl.: F16H 61/472

(54) **GETRIEBEANORDNUNG MIT EINEM HYDROSTATISCHEN GETRIEBE UND EINEM SCHALTGETRIEBE, FAHRZEUG MIT DER GETRIEBEANORDNUNG, UND VERFAHREN ZUR STEUERUNG DER GETRIEBEANORDNUNG**

(30) Priorität: 17.06.2015 DE 102015211096
(71) Anmelder: ROBERT BOSCH GMBH, 70442 Stuttgart (DE)
(72) Erfinder: Ilk, Erich, 86169 Augsburg (DE); Sasse, Fabian, 71638 Ludwigsburg (DE); Brix, Norman, 89340 Leipheim (DE)
(74) Vertreter: Thürer, Andreas

(57) **Zusammenfassung**

Offenbart ist eine Getriebeanordnung mit einem hydrostatischen Getriebe und einem mit letztgenanntem in Reihe koppelbaren oder gekoppelten Schaltgetriebe, und mit einer Steuereinrichtung, über die das Schaltgetriebe automatisiert schaltbar ist.

Offenbart ist weiterhin ein Fahrzeug mit einer derartigen Getriebeanordnung.

Des Weiteren ist offenbart ein Verfahren zur Steuerung einer derartigen Getriebeanordnung.

## Beschreibung

Die Erfindung betrifft eine Getriebeanordnung gemäß dem Oberbegriff des Patentanspruchs 1, ein Fahrzeug mit der Getriebeanordnung gemäß dem Patentanspruch 10 und ein Verfahren zur Steuerung der Getriebeanordnung gemäß dem Patentanspruch 11.

Derartige, gattungsgemäße Getriebeanordnungen haben ein hydrostatisches Getriebe und ein damit in Reihe gekoppeltes Schaltgetriebe. Sie werden beispielsweise in mobilen Bau-, Land- und Forstmaschinen oder ähnlichen Fahrzeugen eingesetzt. Das dem hydrostatischen Getriebe meist nachgeschaltete Schaltgetriebe verfügt über zumindest zwei Getriebestufen, bei deren Wechsel mittels einer Synchronisiereinrichtung die Drehzahl der mit dem Hydromotor des hydrostatischen Getriebes gekoppelten Getriebeeingangswelle des Schaltgetriebes an die jeweilige Fahrsituation und damit an die Drehzahl der Getriebeausgangswelle des Schaltgetriebes angepasst wird.

Aufbauend darauf zeigt die Offenlegungsschrift DE 10 2008 045 536 A1 eine Getriebeanordnung mit einer Steuereinrichtung, über die automatisiert ein manuell angeforderter Gangwechsel auf seine korrekte Durchführung überprüft wird. Bei nicht erfolgreichem Gangwechsel erfolgt ein Rückschalten in den Ausgangsgang entgegen dem angeforderten Gangwechsel, so dass unzulässige Überlastungen oder Spannungen im Getriebe vermieden werden. Nach Ablauf einer Wartezeit erfolgt dann automatisiert ein erneuter Versuch, den ursprünglich manuell angeforderten Schaltvorgang automatisiert durchzuführen.

Die Druckschrift EP 1 076 194 A2 zeigt eine gattungsgemäße Getriebeanordnung, bei der ein Schalten zwischen den Getriebestufen des Schaltgetriebes von einer Steuereinrichtung automatisiert überwacht wird, so dass während des Schaltvorgangs das Abtriebmoment des Hydromotors des hydrostatischen Getriebe zunächst reduziert wird und das Stufengetriebe in einen Neutralzustand geschaltet wird. Von dort ausgehend erfolgt die Synchronisierung der Drehzahl des Hydromotors mit der Drehzahl der Eingangswelle des Schaltgetriebes und es kann in den ausgewählten, neuen Gang geschaltet werden.

Um eine drehmomentfreie Abtriebswelle des Hydromotors und dadurch ein ruckfreies Schalten zu gewährleisten, werden in der Druckschrift DE 101 33 358 B4 zum einen ein mechanischer Anschlag, der das Verdrängungsvolumen des Hydromotors beim Schalten auf einen minimalen Wert begrenzen kann, und zum anderen ein Drehmomentsensor, über den das Drehmoment der Abtriebswelle erfassbar ist, vorgeschlagen. Problematisch hierbei ist, dass zum Einen nicht garantiert werden kann, dass sich der Verstellmechanismus beim Schalten auch wunschgemäß tatsächlich am Anschlag befindet, und dass zum Anderen der Drehmomentsensor vergleichsweise anfällig für Störungen oder Fehler ist. Dadurch kann es trotz dieser Vorkehrungen unerwünschter Weise zu Schaltvorgängen trotz anliegendem Drehmoment kommen, was die Getriebeanordnung strukturell empfindlich belasten kann. Die Druckschriften DE 199 49 177 A1 und DE 101 19 236 C1 zeigen jeweils eine Endlagenerkennung für das Verdrängungsvolumen der zweiten Hydromaschine.

Demgegenüber liegen der Erfindung die Aufgaben zugrunde, eine Getriebeanordnung, die besser gegen Beschädigung beim Schalten geschützt ist, ein Fahrzeug damit und eine Verfahren zur Steuerung dieser Getriebeanordnung zu schaffen.

Die erste Aufgabe wird gelöst durch eine Getriebeanordnung mit den Merkmalen des Patentanspruchs 1, die zweite Aufgabe durch ein Fahrzeug mit den Merkmalen des Patentanspruchs 10 und die dritte durch ein Verfahren mit den Merkmalen des Patentanspruchs 11.

Vorteilhafte Weiterbildungen der Getriebeanordnung und des Verfahrens sind in den abhängigen Patentansprüchen beschrieben.

Eine Getriebeanordnung hat ein Schaltgetriebe mit wenigstens zwei, insbesondere drei, vier oder mehreren, Getriebestufen und einem mit dem Schaltgetriebe in Reihe angeordneten, hydrostatischen Getriebe. Letztgenanntes hat eine erste Hydromaschine, die beispielsweise von einer Antriebsmaschine, insbesondere einem Dieselmotor, antreibbar ist, und eine mit dieser ersten Hydromaschine in einem hydraulischen Kreis, insbesondere in einem geschlossenen Kreis, angeordnete, zweite Hydromaschine. Letztgenannte ist zur Übertragung eines Drehmomentes mit dem Schaltgetriebe koppelbar oder gekoppelt. Die Kopplung ist beispielsweise über eine jeweilige Triebwelle der zweiten Hydromaschine und des Schaltgetriebes ausgebildet. Des Weiteren weist die Getriebeanordnung eine Steuereinrichtung auf, über die das Drehmoment zumindest während einem Schalten von einer zur anderen Getriebestufe - ergänzend insbesondere für ein jeweiliges Zeitintervall vor und/oder nach dem Schalten - reduzierbar ist. Erfindungsgemäß ist eine Erfassungseinrichtung zur Erfassung eines das Drehmoment beeinflussenden Betriebsparameters des hydrostatischen Getriebes vorgesehen, wobei die Steuereinrichtung derart ausgestaltet ist, dass über sie aus dem erfassten Betriebsparameter, genauer gesagt aus dessen Istwert, das Drehmoment ermittelbar und mit einem dem Schalten zugeordneten Sollwert vergleichbar ist.

Über das erfindungsgemäße Zusammenwirken der Erfassungseinrichtung mit der Steuereinrichtung kann somit direkt überprüft werden ob das Drehmoment der zweiten Hydromaschine dem Sollwert entspricht, insbesondere diesen nicht unzulässig überschreitet. Dadurch können Getriebeschäden, die auftreten, falls die angeforderte Getriebestufe nicht ordnungsgemäß geschaltet wurde und die zweite Hydromaschine am Ende des Schaltens wieder mit Drehmoment beaufschlagt wird, verhindert werden. Die Getriebeanordnung erweist sich dadurch gegenüber herkömmlichen Getriebeanordnungen als robuster und für einen Bediener komfortabler schaltbar.

In einer Weiterbildung ist über die Steuereinrichtung zum Reduzieren des Drehmoments der Betriebsparameter änderbar oder verstellbar. Auf diese Weise kann auf die Abweichung des Istwerts vom Sollwert reagiert werden, um ein ordnungsgemäßes Schalten zu ermöglichen.

In einer bevorzugten Weiterbildung weist auch die erste Hydromaschine ein verstellbares Verdrängungsvolumen auf.

Die erste Hydromaschine kann beispielsweise als Axialkobenmaschine in Schrägscheibenbauweise, die zweite Hydromaschine als Axialkobenmaschine in Schrägachsenbauweise ausgeführt sein.

In einer bevorzugten Weiterbildung ist das Verdrängungsvolumen der zweiten Hydromaschine verstellbar und der Betriebsparameter ist das Verdrängungsvolumen oder ein dieses beeinflussender Verstellweg oder Verstellwinkel. Zur Reduzierung des Drehmomentes erfolgt dann die Verstellung des Verdrängungsvolumens, bzw. des Verstellwegs oder des Verstellwinkels, in Richtung eines kleineren Istwertes.

In einer Weiterbildung ist der Betriebsparameter zumindest während dem Schalten - ergänzend insbesondere für ein jeweiliges Zeitintervall vor und/oder nach dem Schalten - über die Steuereinrichtung auf einen Istwert änderbar, zu dem das Drehmoment auf etwa Null reduziert ist. Dann wirkt weder ein Antriebsmoment von der zweiten Hydromaschine auf das Schaltgetriebe, noch wirkt umgekehrt ein Schleppmoment vom Schaltgetriebe auf die zweite Hydromaschine. Diese Drehmomentfreiheit ermöglicht ein besonders schonendes Schalten.

In einer Weiterbildung ist der Betriebsparameter zum Schalten - insbesondere in den Zeitintervallen vor und / oder während und /oder nach dem Schalten, über die Steuereinrichtung auf einen Wert änderbar, zu dem die zweite Hydromaschine hydraulisch geschleppt wird. Dadurch wird die zweite Hydromaschine von der ersten Hydromaschine und dem im hydraulischen Kreis umlaufenden Druckmittel angetrieben. Dies erfolgt vorzugsweise bei einem Verdrängungsvolumen der zweiten Hydromaschine von ungleich Null. Das Verdrängungsvolumen ist dabei derart ausgewählt, dass Drehmomentfreiheit zwischen der zweiten Hydromaschine und dem Schaltgetriebe herrscht.

In einer bevorzugten Weiterbildung ist über die Steuereinrichtung in Abhängigkeit des ermittelten Drehmoments das Schalten und/oder eine dem Schalten zugrunde liegende Schaltanforderung unterbindbar und/oder unterbrechbar und/oder umkehrbar. Entspricht das Drehmoment nicht dem zum Schalten zulässigen Sollwert, so wird trotz manuell oder automatisiert angeforderter Schaltanforderung das Schalten zum Schutz der Getriebeanordnung unterbunden. Ist das Schalten bereits im Gange oder ist die Schaltforderung bereits ergangen, so kann alternativ oder ergänzend bei vom Sollwert abweichendem Istwert des Drehmoments das Schalten oder die Schaltanforderung über die Steuereinrichtung ab- oder unterbrochen werden. Alternativ oder ergänzend - für den Fall, dass das das Schalten bereits fortgeschritten ist, so kann bei Abweichung des Drehmoments vom Sollwert das Schalten oder die Schaltanforderung in einer Weiterbildung über die Steuereinrichtung umgekehrt werden. Dadurch kann über die Steuereinrichtung nach dem Abbruch diejenige Getriebestufe, von der beim Schalten ausgegangen wurde oder die mittels der Schaltanforderung geändert werden sollte, wieder sicher und schonend eingelegt wird.

In einer bevorzugten Weiterbildung ist über die Steuereinrichtung ein zeitlicher Verlauf, insbesondere ein zeitlicher Gradient, des Drehmoments ermittelbar und das Schalten und/oder einer dem Schalten zugrundeliegende Schaltanforderung ist in Abhängigkeit des Verlaufs oder des Gradienten unterbindbar und/oder unterbrechbar oder umkehrbar. Entspricht der Verlauf oder der zeitliche Gradient nicht einem entsprechenden Sollverlauf oder Sollgradienten, so kann beispielsweise durch die bereits besprochene Umkehrung des Schaltens oder der Schaltanforderung von der angeforderten Getriebestufe zurück in die Ausgangsgetriebestufe geschaltet werden.

Prinzipiell kann das Schalten oder die Schaltanforderung manuell, beispielsweise durch die Vorgabe eines Bedieners, und alternativ oder ergänzend dazu automatisiert, beispielsweise in Abhängigkeit von vorbestimmten Betriebsparametern, wie beispielsweise einer Drehzahl oder einer Fahrgeschwindigkeit, erfolgen.

In einer Weiterbildung kann im Anschluss an ein unterbundenes und/oder unterbrochenes und/oder umgekehrtes Schalten eine Wiederholung des Schaltens automatisiert erfolgen. Alternativ oder ergänzend kann im Anschluss an eine unterbundene und/oder unterbrochene und/oder umgekehrte Schaltanforderung automatisiert eine Wiederholung der Schaltanforderung erfolgen. Eine Frequenz und Anzahl der Wiederholungen des Schaltens oder der Schaltanforderung ist vorzugsweise in der Steuereinrichtung parametrierbar, insbesondere parametriert, abgelegt.

In einer Weiterbildung fordert die Schaltanforderung ein Schalten von einer Getriebestufe großer Übersetzung hin zu einer Getriebestufe kleinerer Übersetzung, oder umgekehrt, an.

Bevorzugt ist die Getriebeanordnung, die gemäß wenigstens einem der Aspekte der vorangegangenen Beschreibung ausgestaltet ist, in einem Fahrzeug, insbesondere in einer mobilen Arbeitsmaschine, verbaut.

Ein Verfahren zum Steuern eines Schaltens von Getriebestufen einer Getriebeanordnung, die gemäß wenigstens einem der Aspekte der vorangegangenen Beschreibung ausgestaltet ist, weist erfindungsgemäß folgende Schritte auf: Ein "Erfassen einer Schaltanforderung", insbesondere über die Steuereinrichtung; ein "Erfassen eines Betriebsparameters, von dem das Drehmoment beeinflusst ist", insbesondere über die Erfassungseinrichtung; ein "Ermitteln des Drehmoments aus dem erfassten Betriebsparameter", genauer gesagt aus dem erfassten Istwert des Betriebsparameters, insbesondere über die Steuereinrichtung; und ein "Vergleichen des Drehmoments mit dem Sollwert des Drehmoments, der dem Schalten oder Schaltvorgang zugeordnet ist", ebenso insbesondere über die Steuereinrichtung. Die Vorteile des erfindungsgemäßen Verfahrens sind in der vorangegangenen Beschreibung zur Getriebeanordnung entnehmbar. Aus diesem Grund wird auf die erneute Nennung der Vorteile verzichtet. Dies betrifft ebenso die nun folgenden Verfahrensschritte.

In einer Weiterbildung des Verfahrens erfolgt in Abhängigkeit eines Ergebnisses des Vergleichs des Istwertes des Drehmoments mit dessen Sollwert ein Schritt "Ändern des Betriebsparameters derart, dass das Drehmoment den dem Schalten zugeordneten Sollwert aufweist", insbesondere über die Steuereinrichtung in Zusammenwirken mit einer Verstelleinrichtung. Alternativ oder ergänzend kann ein Schritt "Ändern des Betriebsparameters derart, dass das Drehmoment etwa Null ist und / oder dass die zweite Hydromaschine hydraulisch geschleppt ist", insbesondere über die Steuereinrichtung in Zusammenwirken mit der Verstelleinrichtung, erfolgen. Alternativ dazu kann ein Schritt "Unterbinden und/oder Unterbrechen und/oder Umkehren des Schaltens oder der Schaltanforderung erfolgen", insbesondere über die Steuereinrichtung in Zusammenwirken mit der Verstelleinrichtung.

In einer Weiterbildung erfolgt nach dem Schritt "Unterbinden und/oder Unterbrechen und/oder Umkehren des Schaltens oder der Schaltanforderung" das Schalten oder die Schaltanforderung automatisiert und wiederholt, bis beispielsweise das Schalten erfolgreich durchgeführt wurde und/oder eine maximale Anzahl von Wiederholungen, die vorzugsweise in der Steuereinrichtung parametriert abgelegt ist, durchgeführt wurde.

Ein Ausführungsbeispiel eines Fahrzeugs mit einer erfindungsgemäßen Getriebeanordnung ist in den Zeichnungen dargestellt. Anhand der Figuren der Zeichnungen wird die Erfindung nun näher erläutert. Es zeigen:
Figur 1 ein Ausführungsbeispiel eines Fahrzeugs mit einer Getriebeanordnung mit einem hydrostatischen Getriebe und einem damit gekoppelten Schaltgetriebe, und
Figur 2 eine Hydromaschine des hydrostatischen Getriebes gemäß Figur 1, die mit dem Schaltgetriebe gemäß Figur 1 koppelbar oder gekoppelt ist.

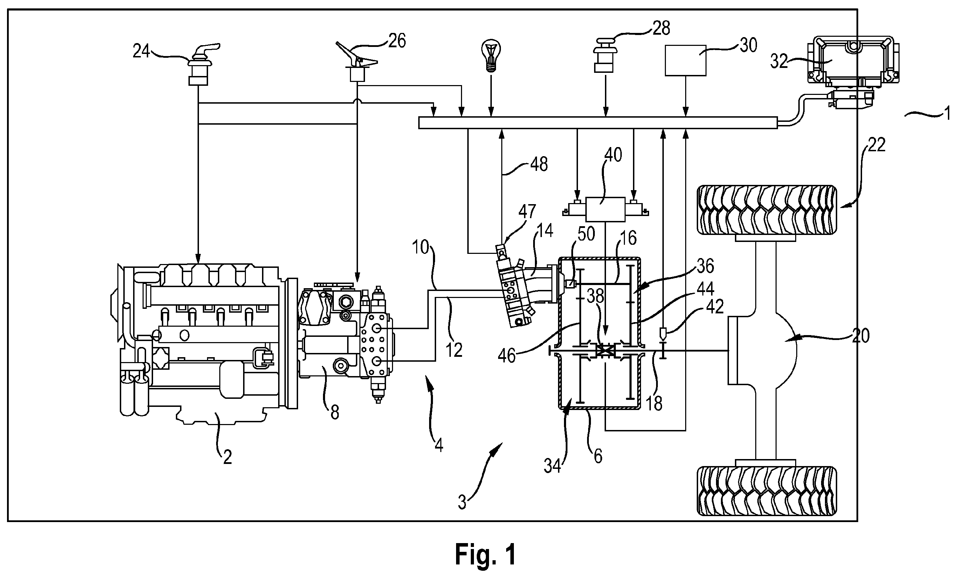

Figur 1 zeigt eine Getriebeanordnung 3 eines als mobile Arbeitsmaschine ausgestalteten Fahrzeugs (Teildarstellung) mit einer als Dieselmotor ausgebildeten Antriebsmaschine 2, einem hydrostatischen Getriebe 4 und einem im Ausführungsbeispiel zweistufigen Schaltgetriebe 6. Das hydrostatische Getriebe 4 hat eine als Axialkolbenpumpe in Schrägscheibenbauweise ausgestaltete erste Hydromaschine 8, die über zwei Arbeitsleitungen 10, 12 mit einer als Axialkolbenmotor in Schrägachsenbauweise ausgebildeten zweiten Hydromaschine 14 fluidisch in einem geschlossenen hydraulischen Kreis verbunden ist. Eine Triebwelle der ersten Hydromaschine 8 ist mit einer Antriebswelle der Antriebsmaschine 2 gekoppelt. Eine Triebwelle der zweiten Hydromaschine 14 ist mit einer Eingangswelle 16 des Schaltgetriebes 6 gekoppelt. Eine Ausgangswelle 18 des Schaltgetriebes 6 ist mit einem Differential 20 einer zweirädrigen Achse 22 gekoppelt. Die beiden Hydromaschinen 8, 14 weisen jeweils ein verstellbares Verdrängungsvolumen auf. Sie sind dabei derart ausgestaltet, dass sie in allen vier Quadranten, in beiden Drehmomentrichtungen und sowohl als Hydropumpe, als auch als Hydromotor arbeiten können.

Des Weiteren hat die Getriebeanordnung 3 einen Gashebel 24, ein Fahrpedal 26, einen Schaltknopf 28, einen Geschwindigkeitssensor 30, sowie eine Steuereinrichtung 32.

Das Schaltgetriebe 6 hat eine erste Getriebestufe 34 mit einer geringen Übersetzung und eine zweite Getriebestufe 36 mit einer großen Übersetzung der Drehzahl der Ausgangswelle 18 zur Drehzahl der Eingangswelle 16. Des Weiteren hat das Schaltgetriebe 6 einen Synchronisierer 38, der von einem hydraulischen Schaltventil 40 betätigbar ist.

Das hydrostatische Getriebe 4 hat einen variablen, kontinuierlich verstellbaren Übersetzungsbereich. Um einen erforderlichen Geschwindigkeitsbereich der mobilen Arbeitsmaschine abdecken zu können, ist dem hydrostatischen Getriebe 4 das Schaltgetriebe 6 mit zwei Getriebestufen 34, 36 nachgeschaltet. Das Schaltgetriebe 6 ist dabei derart ausgestaltet, dass es während der Fahrt schaltbar ist. Eine Getriebeanordnung mit diesem Merkmal ist beispielsweise unter der Bezeichnung "Shift on Fly" der Anmelderin bekannt.

Das Schalten zwischen den Getriebestufen 34 und 36 wird über die Steuereinrichtung 32 automatisiert gesteuert. Um dies zu ermöglichen, ist ein Drehzahlsensor 42 vorgesehen, der die Drehzahl der Ausgangswelle 18 des Schaltgetriebes 6 erfasst. In Abhängigkeit der erfassten Drehzahl kann ein in der Steuereinrichtung 32 zur Ausführung gespeichertes Verfahren die Notwendigkeit für einen Gangwechsel von der ersten Getriebestufe 34 hin zur zweiten Getriebestufe 36, oder umgekehrt, erkennen. Als Schaltkriterium dient dabei eine Grenzdrehzahl der Ausgangswelle 18. Steigt diese Drehzahl von niedrigen Werten hin zur Grenzdrehzahl an, so erfolgt mit erfüllen des Schaltkriteriums der Schaltbefehl der Steuereinrichtung 32 an das Schaltventil 40, die Synchronisiereinrichtung 38 mit dem an der Ausgangswelle 18 angeordneten Losrad 44 der zweiten Getriebestufe 36 zu koppeln. Etwa gleichzeitig mit dieser Kopplung erfolgt die Entkopplung des an der Ausgangswelle 18 angeordneten Losrades 46 der ersten Getriebestufe 34 von der Synchronisiereinrichtung 38. Nach Abschluss des Kopplungsvorgangs ist die zweite Getriebestufe 36 geschaltet, die für höhere Geschwindigkeiten der mobilen Arbeitsmaschine vorgesehen ist.

Der Schaltvorgang erfolgt umgekehrt, von der zweiten Getriebestufe 36 zur ersten Getriebestufe 34, wenn die Drehzahl der Ausgangswelle 18 von Werten oberhalb der Grenzdrehzahl hin zur Grenzdrehzahl absinkt. Bei Vorliegen der Grenzdrehzahl ist dann das Schaltkriterium zum Schalten von der zweiten zur ersten Getriebestufe 34 erfüllt und das Schalten erfolgt automatisiert über die Steuereinrichtung 32.

Der Bediener der Getriebeanordnung 3, bzw. der mobilen Arbeitsmaschine (nicht dargestellt), kann der Steuereinrichtung 32 seinen Beschleunigungswunsch über das Fahrpedal 26 vorgeben. Über den Gashebel 24 kann der Bediener unabhängig davon die Geschwindigkeit oder die Drehzahl des Dieselmotors 2 wählen.

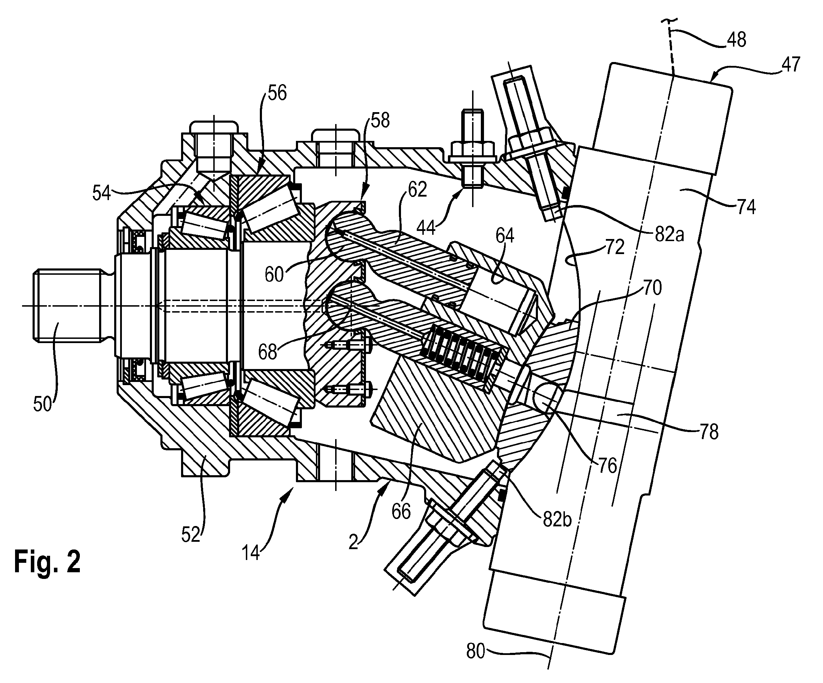

Das in der Steuereinrichtung 32 des Ausführungsbeispiels abgelegte Verfahren zum Schalten der Getriebeanordnung, insbesondere des Schaltgetriebes 6, weist beispielsweise folgenden Algorithmus auf: Wenn die mobile Arbeitsmaschine in Gang gesetzt wird, wählt die Steuereinrichtung 32 automatisiert aufgrund der niedrigeren Drehzahl der Ausgangswelle 18 im Schaltgetriebe 6 die erste Getriebestufe 34 aus, diese ermöglicht ein hohes Drehmoment und damit eine hohe Zugkraft der mobilen Arbeitsmaschine. Sobald das vorgenannte Schaltkriterium der Drehzahl der Ausgangswelle 18 erreicht ist, veranlasst die Steuereinrichtung 32 wie oben beschrieben das Hochschalten in die zweite Getriebestufe 36. Für diesen Zweck wird über die Steuereinrichtung 32 das Verdrängungsvolumen der zweiten Hydromaschine 14 (Hydromotor) erfindungsgemäß innerhalb von einigen Millisekunden auf einen Wert nahe und ungleich 0 cm³ verstellt. Das Verdrängungsvolumen und das daraus resultierende interne Drehmoment der zweiten Hydromaschine 14 reicht dann aus, das Triebwerk (vergleiche Figur 2) der zweiten Hydromaschine 14 hydraulisch mitzuschleppen, so dass von ihr kein Antriebsmoment auf die Eingangswelle 16, und umgekehrt, kein Schleppmoment von der Eingangswelle 16 auf die zweite Hydromaschine 14 übertragen wird. Dieses Mitschleppen des Triebwerks wird an anderer Stelle der Anmeldung der Einfachheit halber auch als Mitschleppen der zweiten Hydromaschine 14 bezeichnet. Zwischen dem hydrostatischen Getriebe 4 und dem Schaltgetriebe 6 herrscht dann Drehmomentfreiheit. Das Schaltventil 40 erhält den Steuerbefehl der Steuereinrichtung 32, die Synchronisiereinrichtung 38 mit dem Losrad 44 der zweiten Getriebestufe 36 zu koppeln. Auf diese Weise erfolgt die Synchronisierung der Eingangswelle 16 des Schaltgetriebes 6 mit dessen Ausgangswelle 18. Nach der Synchronisierung ist die zweite Getriebestufe 36 eingelegt, das heißt der zweite Gang ist geschaltet. Im Anschluss wird das Verdrängungsvolumen der zweiten Hydromaschine 14 ausgehend von Istwert nahe 0 cm³ wieder erhöht, um dem Schaltgetriebe 6 die benötigte Eingangsdrehzahl an der Eingangswelle 16 zur Verfügung zu stellen.

Bei einem Getriebestufenwechsel, das heißt bei einem Schalten, ergaben sich bei herkömmlichen Getriebeanordnungen in der Vergangenheit häufig Getriebeschäden. Grund hierfür war, dass der Schaltvorgang oder die Synchronisation bei gleichzeitigem Vorhandensein eines Drehmomentes der Eingangswelle 16 erfolgte. Dadurch kam es vermehrt zu Schaltabbrüchen, was die Gesamtleistung und den Wirkungsgrad der Getriebeanordnung und damit des Fahrzeugs verringerte. Die Getriebeanordnung 3 weist nun erfindungsgemäß zur Feststellung, ob die Kopplung der zweiten Hydromaschine 14 mit der Eingangswelle 16 tatsächlich drehmomentfrei ist, eine Erfassungseinrichtung 47 auf, über die ein Schwenkwinkel der zweiten Hydromaschine 14 verlässlich erfassbar ist. Die Erfassungseinrichtung 47 ist dabei über eine Signalleitung 48 mit der Steuereinrichtung 32 signaltechnisch verbunden. Über die Erfassungseinrichtung 47 erfolgt die permanente Erfassung des Schwenkwinkels. Dieser wird an die Steuereinrichtung 32 gemeldet, in der ein Verfahren zur Ermittlung des derzeit tatsächlich vorliegenden Drehmoments der zweiten Hydromaschine 14 erfolgt. Aus den Prozessgrößen der Druckdifferenz zwischen den Arbeitsleitungen 10, 12 und dem von der Erfassungseinrichtung 47 erfassten Istwertes des Verdrängungsvolumens der zweiten Hydromaschine 14 errechnet die Steuereinrichtung 32 permanent das tatsächliche Drehmoment. In der Steuereinrichtung 32 ist zudem ein Sollwert für das Drehmoment abgelegt, der eingehalten (unterschritten) sein muss, damit von einer Schaltanforderung des Bedieners oder der automatisiert schaltenden Steuereinrichtung 32 ein Schaltvorgang tatsächlich ausgelöst wird. Erst bei Unterschreiten dieses Sollwertes, wird über die Steuereinrichtung 32 der vorangehend beschriebene Schaltvorgang zwischen den Getriebestufen 34, 36, oder umgekehrt, initiiert. Für den Fall, dass während des Schaltens der Sollwert, unerwarteter Weise, wieder überschritten werden sollte, so dass das Drehmoment zu groß zum Schalten ist, wird von der Steuereinrichtung 32 im Sinne des Schutzes der Getriebeanordnung 3 gegen Beschädigung, die Umkehrung der Schaltanforderung hin zur ursprünglich eingelegten Getriebestufe veranlasst. Auf diese Weise erfolgen Schaltabbrüche automatisiert.

Des Weiteren ist in der Steuereinrichtung 32 ein Verfahren derart hinterlegt, dass das angeforderte Schalten unverzüglich oder nach einer vorbestimmten Totzeit wiederholt wird, sobald der Sollwert des Drehmomentes wieder unterschritten ist. Auf diese Weise erfolgt automatisiert das wiederholte Schalten, bis das Schalten erfolgreich durchgeführt wurde oder bis eine maximale Anzahl von Wiederholungen, die in der Steuereinrichtung 32 parametrisiert abgelegt ist, durchgeführt wurde.

Auf genannte Weise ist beispielsweise bei einem Herausspringen einer Getriebestufe 34, 36, wenn das Schaltgetriebe 6 mit Drehmoment beaufschlagt ist, die Drehmomentfreiheit zwischen dem hydrostatischen Getriebe 4 und dem Schaltgetriebe 6 wiederherstellbar und der Vorgang des Getriebestufenwechsels wird wiederholt. Der besprochene Schaltabbruch kann sowohl bei einem Schalten von der Getriebestufe 34 zur Getriebestufe 36, als auch in umgekehrter Richtung erfolgen. So kann beispielsweise bei einem Synchronisationsfehler während dem Schalten in die zweite Getriebestufe 36 (höheres Übersetzungsverhältnis) der Synchronisationsvorgang des Runterschaltens ausgewählt werden und dadurch die Getriebeanordnung 3 wieder sicher in ihren Ausgangszustand zurückversetzt werden. Mittels der Erfassungseinrichtung 47 und der das Drehmoment überwachenden Steuereinrichtung 32 erhält die Getriebeanordnung 3 eine hohe Robustheit gegenüber Sensor- oder Synchronisierungsfehlern.

Figur 2 zeigt den konstruktiven Aufbau der zweiten Hydromaschine 14. Diese ist als Axialkolbenmaschine in Schrägachsenbauweise mit verstellbarem Verdrängungsvolumen ausgestaltet. Sie hat eine Triebwelle 50, die, wie bereits aus Figur 1 hervorgeht, mit der Eingangswelle 16 des Schaltgetriebes 6 gekoppelt ist (nicht dargestellt in Figur 2). Die Triebwelle 50 ist in einem Gehäuse 52 über Wälzlager 54, 56 drehbar gelagert. An einer Stirnseite der Triebwelle 50 weist diese einen radial erweiterten Flansch 58 mit kalottenförmigen Ausnehmungen auf, in die Kugelköpfe 60 von Arbeitskolben 62 der Hydromaschine 14 eingefasst sind. Die Arbeitskolben 62 sind axial verschieblich in Zylinderbohrungen 64 einer Zylindertrommel 66 angeordnet. Die Zylindertrommel 66 ist auf diese Weise drehfest mit der Triebwelle 50 verbunden. Stirnseitig an der Zylindertrommel 66 ist diese an einer um eine Schwenkachse 68 verschwenkbaren Steuerlinse 70 abgestützt. Die Steuerlinse 70 ist dabei gleitend, verschwenkbar an einer Lagerfläche 72 eines Gehäusedeckels 74 gelagert. Die Steuerlinse 70 weist eine zentrale Durchgangsausnehmung auf, in die ein Kugelkopf 76 eines Verstellzapfens 78 eintaucht. Letztgenannter ist von einer hydraulischen Verstelleinrichtung in Richtung einer Verstellachse 80 zur Verschwenkung der Steuerlinse 70 und damit zur Verstellung des Verdrängungsvolumens der zweiten Hydromaschine 14 axial bewegbar. Zur Begrenzung der Verschwenkung weist die Hydromaschine 14 an jeder Seite ihres Schwenkwinkelbereichs einen Anschlag 82a und 82b auf. Über die Erfassungseinrichtung 47, die als Wegerfassungseinrichtung zur Erfassung des Verstellweges des Verstellzapfens 78 ausgebildet ist, wird über die Signalleitung 48, wie bereits in Figur 1 dargestellt, der Verstellweg der Steuerlinse 70 und damit ein Maß für das Verdrängungsvolumen der zweiten Hydromaschine 14, an die Steuereinrichtung 32 übermittelt. Auf diese Weise kann zu jedem Zeitpunkt des Betriebes der Getriebeanordnung 3 gemäß Figur 1 das Verdrängungsvolumen der zweiten Hydromaschine 14 erfasst und über die gleichzeitig zwischen den Arbeitsleitungen 10, 12 erfasste Arbeitsdruckdifferenz das an der Triebwelle 50 anstehende Drehmoment ermittelt werden. Gemäß der vorangegangenen Beschreibung erfolgt dann der Abgleich mit dem Sollwert für das Drehmoment und, je nach Ergebnis des Abgleichs, das Unterbinden und/oder der Abbruch und/oder die Umkehrung des Schaltens oder der Schaltanforderung.

Offenbart ist eine Getriebeanordnung mit einem hydrostatischen Getriebe und einem mit letztgenanntem in Reihe koppelbaren oder gekoppelten Schaltgetriebe, und mit einer Steuereinrichtung, über die Getriebestufen des Schaltgetriebes gemäß einem in der Steuereinrichtung zur Ausführung gespeicherten Verfahrens automatisiert schaltbar ist. Dabei kann das automatisierte Schalten durch die Erfassungseinheit zur Erfassung des das Drehmoment der zweiten Hydromaschine des hydrostatischen Getriebes beeinflussenden Parameters und die Steuereinrichtung, die daraus das Drehmoment ermittelt und mit einem zulässigen, dem Schalten zugeordneten Sollwert vergleicht, drehmomentfrei und damit schonend erfolgen.

Offenbart ist weiterhin ein Fahrzeug mit einer derartigen Getriebeanordnung.

Des Weiteren ist offenbart ein Verfahren zur erfindungsgemäßen Steuerung, insbesondere Schaltung, einer derartigen Getriebeanordnung.

### Bezugszeichenliste

- 1: Mobile Arbeitsmaschine
- 2: Antriebsmaschine
- 3: Getriebeanordnung
- 4: hydrostatisches Getriebe
- 6: Schaltgetriebe
- 8: erste Hydromaschine
- 10: Arbeitsleitung
- 12: Arbeitsleitung
- 14: zweite Hydromaschine
- 16: Eingangswelle
- 18: Ausgangswelle
- 20: Differential
- 22: Achse
- 24: Gashebel
- 26: Fahrpedal
- 28: Schaltknopf
- 30: Geschwindigkeitssensor
- 32: Steuereinrichtung
- 34: erste Getriebestufe
- 36: zweite Getriebestufe
- 38: Synchronisierer
- 40: Schaltventil
- 42: Drehzahlerfassungseinheit
- 44, 46: Losrad
- 47: Erfassungseinrichtung
- 48: Signalleitung
- 50: Triebwelle
- 52: Gehäuse
- 54, 56: Wälzlager
- 58: Flansch
- 60: Kugelkopf
- 62: Arbeitskolben
- 64: Zylinderbohrung
- 66: Zylindertrommel
- 68: Schwenkachse
- 70: Steuerlinse
- 72: Lagerfläche ?
- 74: Gehäusedeckel
- 76: Kugelkopf
- 78: Verstellzapfen
- 80: Verstellachse
- 82a, 82b: Anschlag

## Patentansprüche

1. Getriebeanordnung mit einem Schaltgetriebe (6) mit wenigstens zwei Getriebestufen (34, 36) und einem damit in Reihe angeordneten hydrostatischen Getriebe (4), das eine erste Hydromaschine (8) und eine mit dieser in einem hydraulischen Kreis angeordnete, zweite Hydromaschine (14) hat, die zur Übertragung eines Drehmomentes mit dem Schaltgetriebe (6) koppelbar oder gekoppelt ist, und mit einer Steuereinrichtung (32), über die das Drehmoment zumindest während einem Schalten von einer (34, 36) zur anderen Getriebestufe (36, 34) reduzierbar ist, **dadurch gekennzeichnet, dass** eine Erfassungseinrichtung (47) zur Erfassung eines das Drehmoment beeinflussenden Betriebsparameters des hydrostatischen Getriebes (4) vorgesehen ist und über die Steuereinrichtung (32) aus dem erfassten Betriebsparameter das Drehmoment ermittelbar und mit einem dem Schalten zugeordneten Sollwert vergleichbar ist.

2. Getriebeanordnung nach Anspruch 1, wobei über die Steuereinrichtung (32) zum Reduzieren des Drehmoments der Betriebsparameter änderbar ist.

3. Getriebeanordnung nach Anspruch 1 oder 2, wobei ein Verdrängungsvolumen der zweiten Hydromaschine (14) verstellbar und der Betriebsparameter das Verdrängungsvolumen ist.

4. Getriebeanordnung nach einem der vorhergehenden Ansprüche, wobei zumindest während dem Schalten der Betriebsparameter über die Steuereinrichtung (32) auf einen Wert änderbar ist, zu dem das Drehmoment auf etwa null reduziert ist.

5. Getriebeanordnung nach einem der vorhergehenden Ansprüche, wobei zum Schalten der Betriebsparameter über die Steuereinrichtung (32) auf einen Wert änderbar ist, zu dem die zweite Hydromaschine (14) hydraulisch geschleppt wird.

6. Getriebeanordnung nach einem der vorhergehenden Ansprüche, wobei über die Steuereinrichtung (32) in Abhängigkeit des ermittelten Drehmoments das Schalten und / oder eine dem Schalten zugrundeliegende Schaltanforderung unterbindbar und / oder unterbrechbar und / oder umkehrbar ist.

7. Getriebeanordnung nach einem der vorhergehenden Ansprüche, wobei über die Steuereinrichtung (32) ein zeitlicher Gradient des Drehmoments ermittelbar ist und das Schalten und / oder eine dem Schalten zugrundeliegende Schaltanforderung in Abhängigkeit des Gradienten unterbindbar und / oder unterbrechbar und / oder umkehrbar ist

8. Getriebeanordnung nach Anspruch 6 oder 7, wobei die Schaltanforderung manuell oder automatisiert erfolgt.

9. Getriebeanordnung nach einem der Ansprüche 6 bis 8, wobei in der Steuereinrichtung (32) ein Wiederholen des Schaltens nach unterbundenem und / oder unterbrochenem und / oder umgekehrtem Schalten und / oder ein Wiederholen der unterbundenen und / oder unterbrochenen und / oder umgekehrten Schaltanforderung parametrierbar abgelegt ist.

10. Fahrzeug, insbesondere ein als mobile Arbeitsmaschine (1) ausgebildetes, mit einer Getriebeanordnung (3), die gemäß einem der vorhergehenden Ansprüche ausgestaltet ist.

11. Verfahren zum Steuern eines Schaltens von Getriebestufen (34, 36) einer Getriebeanordnung (3), die gemäß einem der Ansprüche 1 bis 9 ausgestaltet ist, **gekennzeichnet durch** Schritte,
- Erfassen einer Schaltanforderung,
- Erfassen des Betriebsparameters,
- Ermitteln des Drehmoments aus dem erfassten Betriebsparameter,
- Vergleichen des Drehmoments mit dem dem Schalten zugeordneten Sollwert.

12. Verfahren nach Anspruch 11 wobei in Abhängigkeit eines Ergebnisses des Vergleichs, ein Schritt
- Ändern des Betriebsparameters derart, dass das Drehmoment den dem Schalten zugeordneten Sollwert aufweist und / oder etwa null ist und / oder die zweite Hydromaschine (14) hydraulisch geschleppt ist oder ein Schritt
- Unterbinden und / oder Unterbrechen und / oder Umkehren des Schaltens oder der Schaltanforderung
erfolgt.

13. Verfahren nach Anspruch 12 wobei nach dem Schritt
- Unterbinden und / oder Unterbrechen und / oder Umkehren des Schaltens oder der Schaltanforderung
das Schalten oder die Schaltanforderung automatisiert wiederholt erfolgt.
